# EUROPÄISCHE PATENTANMELDUNG

(11) **EP 1 462 583 A1**
(43) Veröffentlichungstag der Anmeldung: **29.09.2004**
(21) Anmeldenummer: 04405168.8
(22) Anmeldetag: 19.03.2004
(51) Int. Cl.: E03F 5/06

(54) **Höhenverstellbarer Leitungs-, Hüllrohr- und Kanalträger**

(30) Priorität: 27.03.2003 CH 536032003
(71) Anmelder: System Albanese, 8400 Winterthur (CH)
(72) Erfinder: Albanese, Giulio, 8400 Winterthur (CH)
(74) Vertreter: Gachnang, Hans Rudolf

(57) **Zusammenfassung**

Der höhenverstellbare Leitungs-, Hüllrohr- und Kanalträger (39) umfasst mindestens ein Halteelement (25) z.B. aus zwei V-förmig verlaufenden aus Federstahl hergestellten Schenkeln (27) sowie je eine die beiden Schenkel (27) durchdringende Trägerstütze (35). Die Trägerstütze (35) mit einem daran befestigten Fuss (37) lässt sich durch Zusammenpressen der beiden Schenkel (27) vertikal verschieben.

## Beschreibung

Gegenstand der Erfindung ist ein höhenverstellbarer Leitungs-, Hüllrohr- und Kanalträger gemäss Oberbegriff des Patentanspruchs 1.

Beim Verlegen von Abwasserleitungen und Regenwasserkanälen, welch erstere vollständig in Böden oder Bodenplatten von Gebäuden eingegossen werden und welch letztere bündig zur Oberfläche von Bodenplatten zu liegen kommen, ist es notwendig, diesen ein genau vorberechnetes Gefälle zu geben, um den Ablauf des darin geführten Wassers sicherzustellen. Zudem müssen in Decken eingegossene Rohre, Leitungen, Kabel und Hüllrohre für Spannkabel zur Schalung beabstandet liegen, um eine genügende Überdeckung mit Beton zu ermöglichen.

Aus dem Stand der Technik sind bereits verschiedene Lösungsvorschläge für Leitungs- und Kanalträger vorhanden. Z.B. für die Verlegung von Regenwasserkanälen auf Plätzen oder in Arbeitsräumen sind an den meist aus Stahl bestehenden Kanälen seitlich Laschen angeschweisst, welche eine Gewindebohrung oder auch nur eine Durchgangsbohrung aufweisen, in welcher entweder ein Gewindestab mit einem Fuss kämmt oder mit zwei Muttern gehalten wird. Durch Drehen dieser Stützen oder Drehen der Muttern auf den Stützen kann die gewünschte Höhe des Kanals bezüglich der eine als Referenzfläche dienenden Auflagefläche eingestellt werden. Da pro Laufmeter etwa alle 50cm zwei Stützenpaare notwendig sind, bedeutet dies, dass für die Einstellung des Gefälls des Kanales an vier bis sechs Stellen justiert werden muss. Dies ist sehr arbeitsaufwändig und zudem sind die Herstellungskosten für vier bis sechs Stützen pro Laufmeter unverhältnismässig hoch. Ein weiterer Nachteil dieser Vorrichtung besteht darin, dass die Stützen scheibenförmige Metallfüsse aufweisen, die direkt auf die Schalung zu liegen kommen und nach dem Betonieren an der Oberfläche, d.h. an der Decke des darunterliegenden Raumes liegen, und dort Rostflecken verursachen können.
Eine weitere bekannte Vorrichtung zum Ausrichten von Rohren, insbesondere von Hüllrohren für Vorspannseile, besteht aus sogenannten Körbchen, d.h. aus Armierungseisen hergestellten Böcken, deren Höhe nicht einstellbar ist, sondern exakt vorberechnet sein muss, und die folglich an im voraus berechneter Stelle auf die Schalung aufgesetzt werden müssen.

Aufgabe der vorliegenden Erfindung ist die Schaffung eines höhenverstellbaren Leitungs-, Kanal- und Hüllrohrträgers, mit dem das Ausrichten der Kanäle oder Rohre werkzeugfrei, bequem und zeitsparend erfolgen kann.

Gelöst wird diese Aufgabe durch einen höhenverstellbaren Leitungs- und Kanalträger gemäss den Merkmalen des Patentanspruchs 1.

Es gelingt durch das erfindungsgemässe Verstellelement Leitungen, Rohre und Kanäle mit geringem zeitlichen Aufwand und ohne Werkzeuge und Hilfsmittel zu versetzen. Das Versetzen kann auf unebenem Boden, beispielsweise auch direkt ins Erdreich oder auf aus Magerbeton hergestellten Fundamenten, genauso schnell und exakt erfolgen wie auf einer planen Referenzfläche wie eine Decken- oder Wandschalung.

Anhand zweier illustrierter Ausführungsbeispiele wird die Erfindung näher erläutert. Es zeigen
- Figur 1: die beiden aus dem Stand der Technik bekannten Vorrichtungen (links mit Winkeleisen, rechts mit einem unter dem Kanal geschweissten Profileisen),
- Figur 2: eine perspektivische Darstellung des höhenverstellbaren Leitungs- und Kanalträgers mit aufgelegtem Kanal,
- Figur 3: eine perspektivische Darstellung des höhenverstellbaren Leitungs- und Kanalträgers mit am Kanal direkt befestigten Halteelementen und
- Figur 4: eine vergrösserte Darstellung des Leitungs- und Kanalträgers gemäss Figur 2.

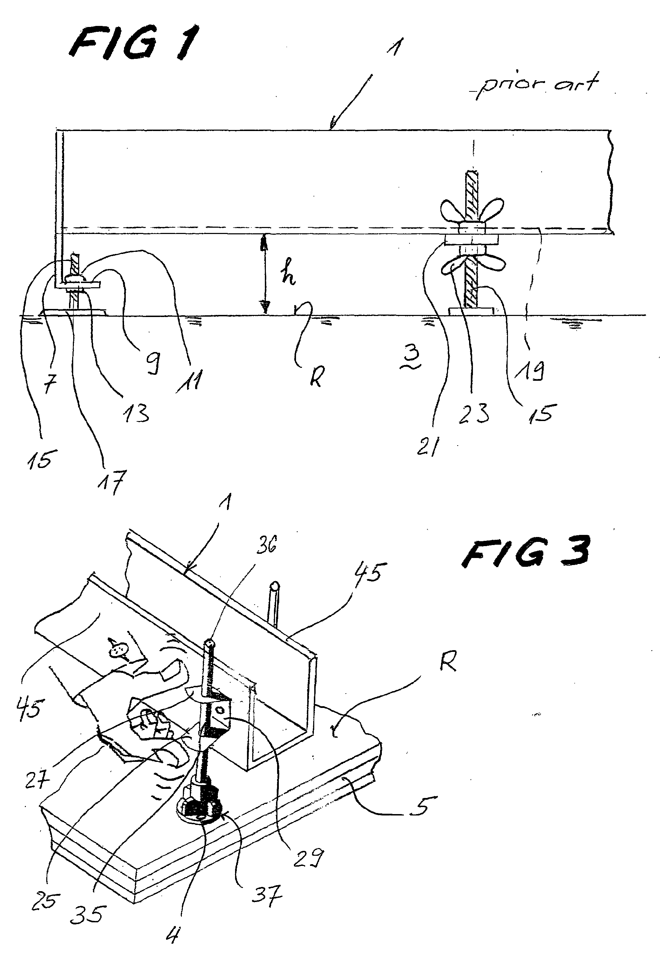

Ein mit Bezugszeichen 1 bezeichneter Leitungskanal mit rechteckigem Querschnitt ist in einem Abstand h über einer Referenzfläche R angeordnet. Die Referenzfläche R kann beispielsweise ein Fundament oder das Erdreich 3 sein; die Referenzfläche R kann auch die Oberfläche einer Schalungsplatte 5 sein, wenn der Leitungskanal 1 auf der Schalung für eine Decke ausgerichtet und später in die Decke einbetoniert werden soll. Im Stand der Technik wird, wie Figur 1, linke Seite zeigt, am Kanal 1 ein Winkeleisen 7 angeschweisst und in dessen horizontalen Schenkel 9 entweder eine Gewindebohrung eingelassen, oder wie in Figur 1 ebenfalls dargestellt, eine Schraubenmutter 11 oder ein Gewinderohr aufgeschweisst. Eine Sicherungsmutter 13 dient dazu, einen Gewindestab 15, an dessen unterem Ende 17 eine Fussplatte 17 befestigt ist, in der eingestellten Höhenlage h zu sichern, um ein Anheben durch den Auftrieb des Kanals 1 im flüssigen Beton zu verhindern.

In einem weiteren bekannten Stand der Technik (Figur 1, rechte Seite) tritt anstelle eines Winkeleisens 7 ein an die Sohle 19 des Kanals 1 angeschweisstes Profileisen 21. In diesem ist wiederum ein Durchgangsloch für die Gewindestange 15 eingelassen. Zur Sicherung und Einstellung der Höhe h dienen in dieser Vorrichtung zwei Flügelmuttern 23.
Bei beiden bekannten Vorrichtungen muss zur Einstellung der Höhe h des Kanals 1 über der Referenzfläche R oder einer anderen Höhenquote an den Gewindestangen 15 oder an den Flügelmuttern gedreht werden. Da bei der Auslieferung der Leitungskanäle 1 die zukünftige Höhenlage noch nicht bekannt ist, müssen die Schrauben meist entweder weit nach oben oder nach unten gedreht werden, bis das Sollmass erreicht ist. Da pro Laufmeter üblicherweise zwei bis drei Stützenpaare vorhanden sind, bedeutet dies, dass an vier bis sechs Stellen diese Arbeit in gebückter Stellung durchgeführt werden muss.

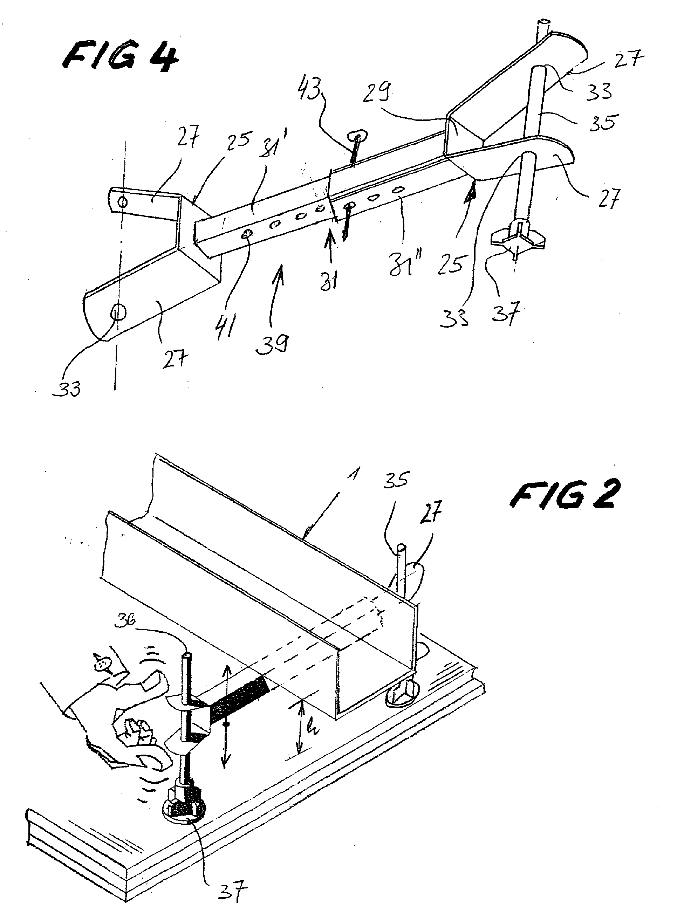

In der erfindungsgemässen Ausführung gemäss den Figuren 2 bis 4, tritt an die Stelle der Gewindestange und den Justier- oder Sicherungsschrauben ein Halteelement 25 in Gestalt einer U-förmigen Feder aus flachem Federstahl, deren Schenkel 27 V-förmig verlaufend angeordnet sind. Deren sich näherliegende Enden sind durch einen geraden oder bogenförmigen Basisschenkel 29 miteinander verbunden. Der Basisschenkel 29 ist mit einem Tragstab 31 stirnseitig verschweisst, vernietet oder anderswie verbunden. In den beiden Schenkeln 27 ist je eine Bohrung 33 angebracht. Die Bohrungen 33 werden von einer Trägerstütze 35 in Gestalt eines Stabes, insbesondere eines Stahlstabes 36, durchdrungen. Der Durchmesser des Stahlstabes 36 ist geringfügig kleiner als der Durchmesser der Bohrungen 33. Der Stahlstab 36 kann eine glatte Oberfläche aufweisen; die Oberfläche kann aber auch mit Rippen oder anderen Erhebungen oder mit einer gerillten Skala versehen sein. Dargestellt ist in den Beispielen ein Stab 36 mit glatter Oberfläche. Am unteren Ende des Trägerstabs 35 ist ein Fuss 37 aus Kunststoff aufgesetzt. Die Verbindung zwischen Stahlstab 36 und Fuss 37 erfolgt kraftschlüssig in einer Sackbohrung im Fuss 37. Der Fuss 37 kann eine Sternform aufweisen (vgl. Figur 4) oder wie in Figur 2 dargestellt tellerförmig sein. Zudem können in der Platte des Fusses 37 (siehe Figur 3) eine oder mehrere Nagelbohrungen 33 eingelassen sein, durch welche ein Nagel hindurchführbar ist, um den Fuss 37 auf der Schalungsplatte 5 zu fixieren (Nagel nicht dargestellt). Alternativ kann der Fuss 37 auch aus einem anderen, nicht korrodierenden Material wie Beton, Keramik, Rostfreistahl etc. hergestellt sein.

Der höhenverstellbare Leitungs- und Kanalträger, kurz Träger 39, des ersten erfindungsgemässen Ausführungsbeispieles umfasst die beiden Halteelemente 25, welche mit den Enden des Trägerstabs 31 verbunden sind. Weiter umfasst er die beiden Trägerstützen 35 mit den daran befestigten Füssen 37.

Zum Versetzen von Leitungskanälen 1 oder auch von Rohren werden in Abständen Träger 39 auf die Referenzfläche R aufgesetzt und - sofern notwendig - mit einem oder mehreren Nägeln 33 befestigt. Danach können die Kanäle oder Rohre 1 auf die horizontal liegenden Trägerstäbe 31 aufgelegt werden. Um den Auftrieb im flüssigen Beton zu widerstehen, müssen die Kanäle oder Rohre 1 mit geeigneten Mitteln, z.B. Kabelbindern, an den Trägerstäben 31 befestigt werden. Alternativ können auch Beschwerungsmittel wie Eisenstücke in den Kanal eingelegt werden. Ohne Benutzung eines Werkzeuges und ausschliesslich von Hand kann danach die Höhe h durch Zusammenpressen der beiden Schenkel 27 an den Halteelementen 25 und Verschieben in vertikaler Richtung eingestellt werden (vgl. Figuren 2/3). Beim Zusammenpressen der Schenkel 27 wird nämlich die Klemmung zwischen dem Stahlstab 36 und den Schenkeln 27 aufgehoben. Die Verklemmung zwischen diesen beiden Elementen ergibt sich dadurch, dass das Hindurchführen des Stahlstabs 36 durch die beiden Löcher 33 nur bei im wesentlichen parallel liegenden Schenkeln 25 erfolgen kann. Sobald diese nicht mehr zusammengedrückt werden und sich folglich V-förmig spreizen, ergibt sich eine Verkantung der Stahlstäbe 36 in den Löchern 33. Die Verkantung und damit die Verklemmung ist umso grösser, je höher die Kraft von oben auf den Trägerstab 31 wirkt. Aber auch die Auftriebskraft wird in gleicher Weise aufgefangen. Selbstverständlich können die Träger 39 bereits vor dem Auflegen der Kanäle 1 oder Rohre höhenjustiert werden.

Dies geht im übrigen noch leichter, da dann keine Last zu heben ist.

Im zweiten Ausführungsbeispiel gemäss Figur 3 sind die beiden Halteelemente 35 mit deren Basisschenkel 29 direkt oder indirekt an den Wänden 45 des Leitungskanals 1 befestigt. Die Befestigung kann beispielsweise durch Schrauben, Blindnieten oder durch Schweissen erfolgen. Das Versetzen von Leitungskanälen 1 mit bereits daran seitlich befestigten Halteelementen 25 und eingesetzten Trägerstützen 35 erfolgt auf genau dieselbe Art wie beim ersten Ausführungsbeispiel, in dem nämlich mit Daumen und Zeigefinger die Schenkel 27 der Halteelemente 25 zusammengedrückt und so eine vertikale Verschiebung des Kanals 1 bezüglich der Referenzfläche 1 möglich wird.

Vor dem Giessen des Betons oder auch danach können die oberhalb der Schenkel 27 liegenden Abschnitte der Stahlstäbe 36 abgetrennt werden, falls diese die Betonoberflächen überragen würden. Die Füsse 37 aus Kunststoff oder einem anderen nicht rostenden Material, welche nach dem Ausschalen einer Decke an deren Oberfläche zu liegen kommen, verhindern eine Rostbildung, denn die üblicherweise aus Stahl bestehenden Trägerstützen 35 gelangen nicht in Kontakt mit der Oberfläche der Decke; sie liegen in einem Abstand, der eine Rostbildung sicher verhindert.

Mit den erfindungsgemässen Leitungs- und Kanalträgern 39 können nicht nur in Böden einzugiessende Rohrleitungen 1 wie Abwasserleitungen oder Kanäle exakt versetzt werden, sondern es lassen sich auch Hüllrohre, welche später Spannseile im Spannbetonbau aufnehmen, massgenau verlegen. Für die Verlegung von Hüllrohren von Spannseilen ist die Verwendung der dort vorhandenen, aus dem Anschlussbauwerk herausragenden Armierungsanschlusseisen als Trägerstützen 35 denkbar. Voraussetzung dazu ist, dass die Löcher 33 in den Halteelementen 25 eine entsprechende Dimensionierung aufweisen, d.h. dass der Durchmesser der Haltelöcher 33 geringfügig grösser ist als der Durchmesser der Armierungsanschlusseisen. Um die normalerweise unterschiedlichen Abstände zwischen aus dem Anschlussbauwerk herausragenden Armierungsanschlusseisen ausgleichen zu können, schlägt die Erfindung vor, den Trägerstab 31 zweiteilig zu gestalten, nämlich aus einem Innenrohr 31', das am ersten Halteelement 25 befestigt ist, und einem mit geringem Spiel über dem Innenrohr 31' verschiebbaren äusseren Rohr 31", das mit dem zweiten Halteelement 25 verbunden ist. Anstelle von teleskopisch ineinander geführten Rohren 31', 31" können auch andere, ineinander verschiebbare Profile Verwendung finden. Zum Festlegen der eingestellten Länge können die Rohre 31', 31" oder Profile mit Löchern oder Schlitzen 41 versehen sein, durch welche ein Nagel oder ein Stift 43 hindurchführbar ist.

Damit auch Kanäle 1 in sehr geringem Abstand zur Referenzfläche R versetzt werden können, schlägt die Erfindung vor, den Trägerstab 31 bogen- oder V-förmig auszubilden, so dass dessen zentraler Bereich tiefer liegt als dessen Enden, die mit den Halteelementen 25 verbunden sind (keine Abbildung).
Für die Verlegung von Kanälen oder Rohren 1 in Wänden, können die Trägerstützen 35 mit deren Füssen 37 an den Wandschalungen befestigt werden. Vorzugsweise wird dann das Halteelement 27 am Boden des Kanals 1 befestigt oder es werden die Kanalträger 39 oder die Trägerstäbe 31 als als Winkel ausgebildet.

In einer weiteren nicht dargestellten Ausbildung der Erfindung können die beiden Trägerstützen 35 an deren unteren Enden miteinander verbunden sein und ein "U" bilden. Die beiden Schenkel des U's bilden dann die Trägerstützen 35, an denen die Halteelemente 25 befestigt sind. Damit der die beiden Schenkel verbindende Basissteg nicht in Kontakt mit der Referenzfläche R gelangen kann, sind an diesem Distanzelemente befestigt, mit denen der U-förmige Träger 39 beabstandet auf der Unterlage lagestabil fixiert werden kann. Als Distanzelemente dienen Elemente aus Kunststoff, Beton oder anderen, nicht korrodierenden Materialien.

## Patentansprüche

1. Höhenverstellbarer Leitungs-, Hüllrohr- und Kanalträger (39) für in Beton oder ins Erdreich einzubringende Leitungen, Hüllrohre und Kanäle (1), umfassend mindestens eine Trägerstütze (35) mit einem Verstellelement (25) zum Einstellen des Abstandes (h) der Leitung, des Hüllrohres oder des Kanals (1) bezüglich einer Referenzfläche (R), **dadurch gekennzeichnet, dass** das Verstellelement ein kraftschlüssig wirkendes Halteelement (25) umfasst.

2. Träger nach Anspruch 1, **dadurch gekennzeichnet, dass** das Halteelement (25) die Trägerstütze (35) mit radial klemmenden Mitteln umfasst.

3. Träger nach einem der Ansprüche 1 oder 2, **dadurch gekennzeichnet, dass** das Halteelement (25) ein federelastisches, U-förmiges Halteelement (25) mit zwei Schenkeln (27) und einem Basisschenkel (29) umfasst, dessen Schenkel (27) von der mindestens einen Trägerstütze (35) durchdrungen werden und dass das Halteelement (25) durch Zusammenpressen der beiden Schenkel (27) entlang den Trägerstützen (35) vertikal verschiebbar ist.

4. Träger nach einem der Ansprüche 1 bis 3, **dadurch gekennzeichnet, dass** zwei paarweise zusammenwirkende Halteelemente (25) an den Enden eines Trägerstabes (31) befestigt sind und von zwei Trägerstützen (35) durchdrungen werden.

5. Träger nach Anspruch 4, **dadurch gekennzeichnet, dass** der Trägerstab (31) teleskopisch längenverstellbar ist.

6. Träger nach Anspruch 5, **dadurch gekennzeichnet, dass** die Länge des Trägerstabes (31) durch Einstecken eines Nagels oder Stiftes (43) in an den Trägerstababschnitten (31',31") angebrachten Löchern (41) festlegbar ist.

7. Träger nach einem der Ansprüche 1 bis 3, **dadurch gekennzeichnet, dass** die Halteelemente (25) an den beiden Wänden oder am Boden (45) der Kanäle (1) befestigt sind.

8. Träger nach einem der Ansprüche 1 bis 7, **dadurch gekennzeichnet, dass** die Trägerstützen (35) durch die Schenkel eines auf den Kopf gestellten U's gebildet werden.

9. Träger nach einem der Ansprüche 1 bis 7, **dadurch gekennzeichnet, dass** als Trägerstützen (35) Armierungs-Anschlusseisen dienen.
